Europäisches Patentamt

European Patent Office

Office européen des brevets

(19)

(11) Publication number: **0 331 508**
A2

## (12) EUROPEAN PATENT APPLICATION

(21) Application number: **89302130.3**

(22) Date of filing: **03.03.89**

(51) Int. Cl.⁴: **F 21 V 23/00**
**F 21 V 23/04**

(30) Priority: **04.03.88 GB 8805165**

(43) Date of publication of application:
**06.09.89 Bulletin 89/36**

(84) Designated Contracting States:
**AT BE CH DE ES FR GB GR IT LI LU NL SE**

(71) Applicant: **NEW WORLD ELECTRONIC PRODUCTS LIMITED**
**Unit 6c. Wavertree Technology Park,**
**Liverpool. L14 (GB)**

(72) Inventor: **Gough, Keith Adrian**
**3 Blaking Drive Knowsley Village**
**Prescott Merseyside L34 0JE (GB)**

(74) Representative: **Ajello, Michael John**
**38a Bramhall Lane South**
**Bramhall Stockport Cheshire SK7 1AH (GB)**

(54) **A lighting appliance.**

(57) A lighting appliance for use exterior to a building and which will be switched on automatically as a person enters a predetermined zone around the appliance, comprising a P.L. lamp connected to a power supply and switched by a volumetric detection device such as a P.I.R. detector. The appliance will operate efficiently in cold weather conditions and the tube will be started instantly under such conditions since it is equipped with a high voltage generator or electronic ballast as opposed to an inductive ballast starter of the kind conventionally used with a fluorescent lamp tube.

FIG.3

EP 0 331 508 A2

## Description

## A LIGHTING APPLIANCE

THIS INVENTION concerns a lighting appliance of the kind particularly, though not exclusively, for use exterior to a building, and having a volumetric detector device to switch on the lamp as a person approaches. Appliances of this kind are becoming increasingly popular as an aid to security located, for example, close to a front door of a domestic dwelling, the object being that the lamp will be switched on automatically as a person enters a predetermined zone around the lamp.

Many such appliances use a standard tungsten filament, gas filled bulb which is switched by a volumetric detector such as a so-called "past-infra-red" device (P.I.R) which operates upon visible detection of movement. It has been proposed to use, instead, a small fluorescent lamp tube known as a "P.L. lamp", but such a tube is difficult to start in cold weather conditions.

It is an object of the present invention to provide a lighting appliance of the kind generally referred to and including a fluorescent lamp tube which in many cases is economically more attractive than a standard tungsten filament bulb, and wherein the problem of starting in cold weather is substantially overcome.

According to the present invention there is provided a lighting appliance comprising a fluorescent lamp tube connected to a power supply and switched thereto by a volumetric detection device, characterised in that the tube is energised, or started, by a high voltage generator or electronic ballast.

An embodiment of the invention will now be described, by way of example only, with reference to the accompanying drawings, in which:-

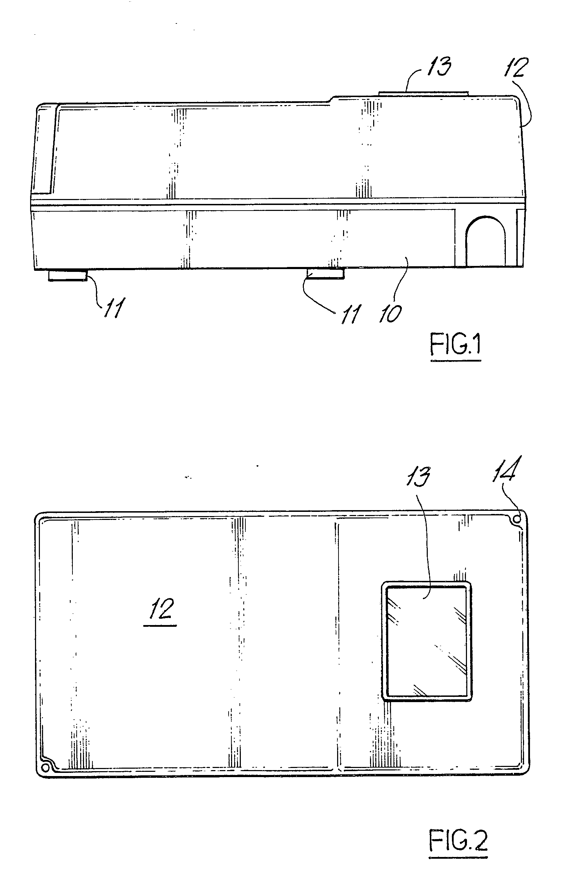

Fig. 1 is a side view of a lighting appliance made in accordance with the invention;

Fig. 2 is a front view thereof;

Fig. 3 is a view similar to Fig. 2 but with a translucent cover thereof removed;

and Fig. 4 is a block circuit diagram of a system to supply power to the device.

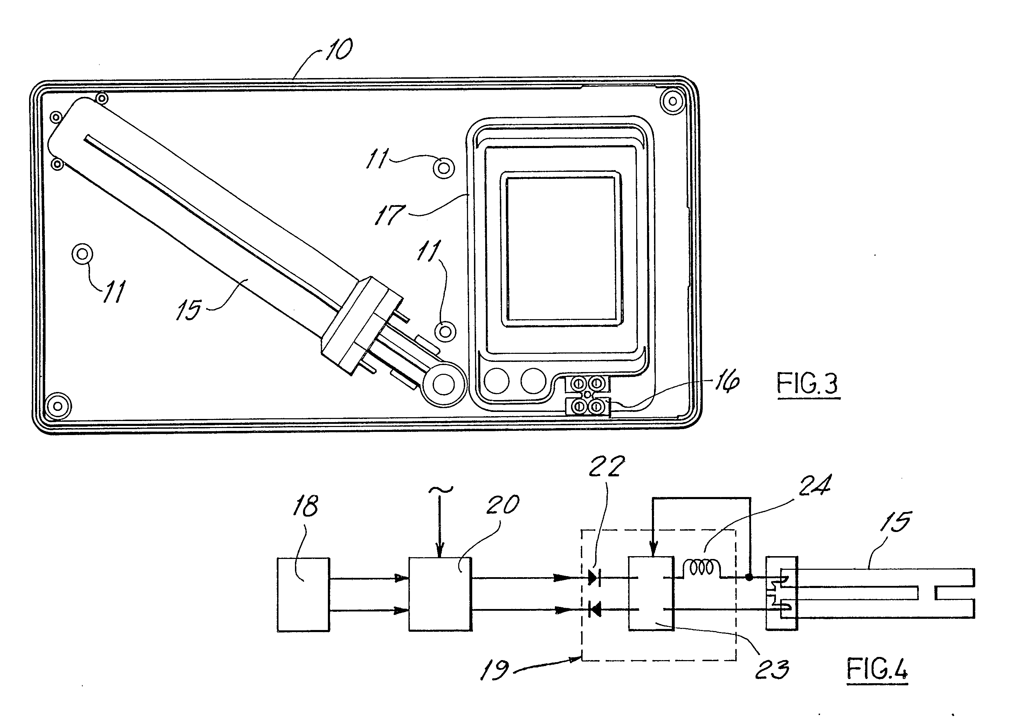

The appliance which is generally for use on an exterior wall of a house, for example, close to a front door, consists of a base 10 screwed or otherwise attached at spaced points 11 to a wall (not shown), and a removable transparent or translucent cover (12). For aesthetic reasons the cover 12 may be ribbed so that it is of low transparency but there is provided in the front face of cover 12 a fully transparent window 13. Preferably, the entire cover 12 is integrally moulded of glass or plastics and is attached to base 10 by screws 14. Referring now to Fig. 3, mounted within the base 10 of the appliance is a miniature fluorescent lamp tube or P.L. lamp 15. A power supply cable is connected to a terminal block 16 which in turn is connected to an assembly 17 which houses a P.I.R. volumetric detection device 18 (see Fig. 4) and a high voltage generator or electronic ballast 19, and, if required, a time switch 20. The P.I.R. device is thus positioned immediately behind the window 13, for visible actuation.

The electronic ballast 19 comprises a rectifier 22, a high frequency oscillator 23, a small choke 24, and a positive feedback line 25 to control the frequency of the oscillator.

An output from the PL lamp 15 rectifies to the DC level and is fed into the high frequency oscillator 23 which steps the frequency from 50Hz to around 400Hz, variable depending upon whether or not the lamp has lit. The PL lamp requires a capacitor rather than a conventional starter.

Preferably, a time switch 20 is connected directly between the power supply and the detector 18 so that the latter can actuate the lamp only during predetermined periods as determined by the time switch.

The use of a miniature fluorescent lamp tube in an appliance of this kind is of considerable advantage when compared with a standard tungsten filament bulb since it consumes less current for an equivalent or increased level of illumination, and its operating life usually is considerably longer than a tungsten filament bulb.

Previously such a lamp tube has been a disadvantage in exterior lighting appliances actuated by proximity detectors in view of the time taken for the lamp to start, using a conventional inductive ballast starter. With the conventional starter the tube is very slow to start under cold weather conditions and indeed may not start at all. However, with the use of an electronic ballast starter, this problem is eliminated.

It will be appreciated that where an appliance of this kind is used to detect the presence of an intruder, it is essential that the lamp is energised immediately upon movement of the person within the predetermined zone. Therefore, the combination of an instant start characteristic with a more efficient lamp tube produces an appliance which is improved with respect to conventional appliances.

Whilst the time switch 20 can be housed within the appliance itself, alternatively it may be located at a remote position in line with the power supply.

It is not intended to limit the invention to the above example only, many variations, such as might readily occur to one skilled in the art, being possible without departing from the scope of the invention. For example, the P.L. lamp tube, instead of being of single rod form, may be of a configuration to occupy a greater area of the base 10, and the volumetric detection device may be one of several different kinds of proximity detector.

If a main power supply is not available the appliance may be powered by its own internal battery. This facility is not available when using a standard inductive ballast starter which requires mains power for operation.

## Claims

1. A lighting appliance comprising a fluorescent lamp tube connected to a power supply and switched thereto by a volumetric detection device, characterised in that the tube is energised, or started, by a high voltage generator or electronic ballast.

2. A lighting appliance according to Claim 1, wherein the fluorescent lamp tube is a P.L lamp.

3. A lighting appliance according to Claim 1 or Claim 2, wherein the volumetric detection device is a P.I.R. detector.

4. A lighting appliance according to any preceding claim, including a time switch such that the lamp may be energised only during predetermined periods as selected.

5. A lighting appliance according to any preceding claim, enclosed within a base having a translucent cover.

6. A lighting appliance according to Claim 5, wherein said translucent cover includes a transparent window behind which is located the volumetric detection device.

7. A lighting appliance according to any preceding claim, wherein said fluorescent lamp tube is of single rod form.

8. A lighting appliance according to Claim 5, wherein said fluorescent lamp tube is of a configuration to occupy a substantial area of the base and translucent cover.

9. A lighting appliance according to any preceding claim, wherein said power supply is provided by a battery contained within the appliance.

10. A lighting appliance according to any preceding claim, wherein the electronic ballast comprises a rectifier, a high frequency oscillator and a positive feedback line to control the frequency of the oscillator.

FIG.1

FIG.2

FIG.3

FIG.4